# EUROPEAN PATENT APPLICATION

(11) **EP 4 564 658 A1**
(43) Date of publication of application: **04.06.2025**
(21) Application number: 22956083.4
(22) Date of filing: 25.08.2022
(51) Int. Cl.: H02M 3/335

(54) **POWER CONVERTER AND POWER SOURCE**

(71) Applicant: Huawei Digital Power Technologies Co., Ltd., Shenzhen, Guangdong 518043 (CN)
(72) Inventor: HE, Zhengyan, Shenzhen, Guangdong 518043 (CN)
(74) Representative: Isarpatent
(86) International application number: PCT/CN2022/114925
(87) International publication number: WO 2024/040537

(57) **Abstract**

This application provides a power converter and a power supply. The power converter includes a DC-AC conversion circuit, a transformer, and a first AC-DC conversion circuit. The DC-AC conversion circuit is coupled to the first AC-DC conversion circuit through the transformer. A primary-side winding of the transformer includes at least two sub primary-side windings. The at least two sub primary-side windings include at least three primary-side winding connection ends. A quantity of turns of each sub primary-side winding is correspondingly adjusted based on a change of a corresponding input excitation voltage. The DC-AC conversion circuit is configured to generate at least two different excitation voltages in a time-division manner. One excitation voltage is correspondingly output to one sub primary-side winding. In this application, on a primary-side winding side of the transformer, excitation is correspondingly performed on windings having different quantities of turns in the primary-side winding in a matched manner based on different excitation voltages generated by the DC-AC conversion circuit, so that voltage regulation flexibility of the power converter can be improved.

## Description

### TECHNICAL FIELD

This application relates to the field of power supplies, and in particular, to a power converter and a power supply.

### BACKGROUND

In a direct current-direct current (DC-DC, Direct Current-Direct Current) converter, a transformer is usually used to isolate input and output. Energy transmission of the DC-DC converter includes converting an input DC voltage into an AC voltage, and converting the AC voltage into a DC voltage for output through coupling by using the transformer. When the DC-DC converter has two different input voltages, a bias correction capacitor may be connected in series to the transformer to avoid bias excitation of the transformer under excitation of the two different input voltages. However, for the DC-DC converter with the bias correction capacitor, it is assumed that there are two unequal input voltages V1 and V2, and V1 is greater than V2. According to a symmetric excitation principle, it can be learned that, in this case, an equivalent input voltage of the DC-DC converter is equal to (V1 + V2)/2, and voltage regulation flexibility of the DC-DC converter is low.

### SUMMARY

This application provides a power converter and a power supply, to improve voltage regulation flexibility of the power converter.

According to a first aspect, a power converter is provided. The power converter includes a direct current DC-alternating current AC conversion circuit, a transformer, and a first AC-DC conversion circuit. The DC-AC conversion circuit is coupled to the first AC-DC conversion circuit through the transformer. A primary-side winding of the transformer includes at least two sub primary-side windings. The at least two sub primary-side windings include at least three primary-side winding connection ends. The at least two sub primary-side windings share one primary-side winding connection end. The at least three primary-side winding connection ends are connected to at least three output connection ends of the DC-AC conversion circuit in a one-to-one correspondence manner. A quantity of turns of each sub primary-side winding is correspondingly adjusted based on a change of a corresponding input excitation voltage.

In addition, the DC-AC conversion circuit is configured to generate at least two different excitation voltages in a time-division manner. One excitation voltage is correspondingly output to one sub primary-side winding. A quantity of turns of the sub primary-side winding is correspondingly adjusted based on a change of the input excitation voltage.

In this application, on a primary-side winding side of the transformer, excitation is correspondingly performed on windings having different quantities of turns in the primary-side winding in a matched manner based on different excitation voltages generated by the DC-AC conversion circuit. In other words, one excitation voltage is correspondingly input to one sub primary-side winding, and the quantity of turns of the sub primary-side winding is adjusted based on a change of the corresponding input excitation voltage. Therefore, currents and energy magnitudes of different excitation voltages input to the transformer can be adjusted, and voltage regulation flexibility of the power converter can be improved.

In some possible embodiments of the first aspect, the power converter further includes a capacitor. The capacitor is connected in series with the transformer.

In this application, the capacitor connected in series with the transformer is disposed to resolve a problem of bias excitation caused by a case that at least two different excitation voltages are input to the transformer.

In some possible embodiments of the first aspect, the DC-AC conversion circuit includes a first switch, a second switch, a third switch, and a fourth switch. The first switch and the third switch are connected in series and then connected to a second direct current source. One end of the second switch is connected to a first direct current source, and the other end of the second switch is used as an output connection end of the DC-AC conversion circuit and is connected to one end of a first sub primary-side winding of the at least two sub primary-side windings. One end of the fourth switch is connected to one end of a second sub primary-side winding of the at least two sub primary-side windings, and the other end of the fourth switch is grounded. A common connection end of the first sub primary-side winding and the second sub primary-side winding is connected to a series connection end of the first switch and the third switch through the capacitor.

In this solution, the first switch to the fourth switch are disposed to implement that the first direct current source and the second direct current source are used as different power supplies in a time-division manner. The different power supplies provide two different excitation voltages after voltage division.

In some possible embodiments of the first aspect, the DC-AC conversion circuit includes a first switch, a second switch, a third switch, and a fourth switch. The first switch and the third switch are connected in series and then connected to the first direct current source. One end of the second switch is connected to a first direct current source, and the other end of the second switch is used as an output connection end of the DC-AC conversion circuit and is connected to one end of a first sub primary-side winding of the at least two sub primary-side windings. One end of the fourth switch is connected to one end of a second sub primary-side winding of the at least two sub primary-side windings, and the other end of the fourth switch is grounded. A common connection end of the first sub primary-side winding and the second sub primary-side winding is connected to a series connection end of the first switch and the third switch through the capacitor. A duty cycle of the first switch and the fourth switch is different from a duty cycle of the second switch and the third switch.

In this solution, the first direct current source is used as a power supply. The duty cycles of the first switch to the fourth switch are controlled to be different, to provide two different excitation voltages.

In some possible embodiments of the first aspect, the DC-AC conversion circuit includes a first switch and a second switch. One end of the first switch is connected to the first direct current source, and the other end of the first switch is used as an output connection end of the DC-AC conversion circuit and is connected to one end of a first sub primary-side winding of the at least two sub primary-side windings. One end of the second switch is connected to one end of a second sub primary-side winding of the at least two sub primary-side windings, and the other end of the second switch is grounded. A common connection end of the first sub primary-side winding and the second sub primary-side winding is grounded through the capacitor.

In this solution, the first direct current source and the capacitor are used as different power supplies. Two different excitation voltages are provided after voltage division.

In some possible embodiments of the first aspect, the first AC-DC conversion circuit includes a first rectifying device, a second rectifying device, a third rectifying device, and a fourth rectifying device. The first rectifying device and the third rectifying device are connected in series and then connected in parallel to output ends of the first AC-DC conversion circuit. The second rectifying device and the fourth rectifying device are connected in series and then connected in parallel to the output ends of the first AC-DC conversion circuit. A secondary-side winding of the transformer is connected in parallel between a series connection end of the first rectifying device and the third rectifying device and a series connection end of the second rectifying device and the fourth rectifying device.

In this solution, the first rectifying device to the fourth rectifying device are disposed, to implement rectification on currents that are output by the transformer and that have different current flow directions.

In some possible embodiments of the first aspect, the secondary-side winding of the power transformer includes at least two sub secondary-side windings. The at least two sub secondary-side windings include at least three secondary-side winding connection ends. The at least two sub secondary-side windings share one secondary-side winding connection end. The at least two sub secondary-side windings are in a one-to-one correspondence with the at least two sub primary-side windings. In addition, a quantity of turns of any sub secondary-side winding is correspondingly adjusted based on a change of an excitation voltage input to any corresponding sub primary-side winding. The first AC-DC conversion circuit includes at least three input connection ends. The at least three input connection ends are connected to the at least three secondary-side winding connection ends in a one-to-one correspondence manner.

In this solution, based on different excitation voltages input by the DC-AC conversion circuit, a quantity of turns of the primary-side winding and a quantity of turns of the secondary-side winding that play a role of voltage transformation may be adjusted at the same time, to adjust currents and energy magnitudes of different excitation voltages input to the transformer. Therefore, voltage regulation flexibility of the power converter can be improved.

In some possible embodiments of the first aspect, the first AC-DC conversion circuit includes a first rectifying device, a second rectifying device, a third rectifying device, and a fourth rectifying device. The first rectifying device and the third rectifying device are connected in series and then connected in parallel to output ends of the first AC-DC conversion circuit. One end of the second rectifying device is connected to one end of a first sub secondary-side winding of the at least two sub secondary-side windings, and the other end of the second rectifying device is connected to the output end of the first AC-DC conversion circuit. One end of the fourth rectifying device is connected to one end of a second sub secondary-side winding of the at least two sub secondary-side windings, and the other end of the fourth rectifying device is connected to the output end of the first AC-DC conversion circuit. A common connection end of the first sub secondary-side winding and the second sub secondary-side winding is connected to a series connection end of the first rectifying device and the third rectifying device.

In this solution, the excitation voltage input to the transformer is matched to adjust the quantity of turns of the primary-side winding that plays a role of voltage transformation. Further, the quantity of turns of the secondary-side winding of the transformer may be adjusted to match the excitation voltage input to the transformer. When there are two excitation voltages, the first rectifying device to the fourth rectifying device may be disposed in the first AC-DC conversion circuit, to implement rectification on currents that are output by the transformer and that have different current flow directions.

In some possible embodiments of the first aspect, the power converter further includes an inductor connected in series with the transformer.

In this solution, the inductor connected in series with the transformer is disposed, to implement voltage stability.

According to a second aspect, this application further provides a power converter. The power converter includes a direct current DC-alternating current AC conversion circuit, a transformer, and a first AC-DC conversion circuit. The DC-AC conversion circuit is coupled to the first AC-DC conversion circuit through the transformer. The DC-AC conversion circuit is configured to generate at least two different excitation voltages in a time-division manner. A secondary-side winding of the transformer includes at least two sub secondary-side windings. The at least two sub secondary-side windings include at least three secondary-side winding connection ends. The at least two sub secondary-side windings share one secondary-side winding connection end. A quantity of turns of one sub secondary-side winding is correspondingly adjusted based on a change of an excitation voltage input to a primary-side winding of the transformer. The first AC-DC conversion circuit includes at least three input connection ends. The at least three input connection ends are connected to the at least three secondary-side winding connection ends in a one-to-one correspondence manner.

In this solution, on a secondary-side winding side of the transformer, a quantity of turns of the secondary-side winding that plays a role of voltage transformation is adjusted based on different excitation voltages input to the primary-side winding, to adjust currents and energy magnitudes of different excitation voltages input to the transformer. Therefore, voltage regulation flexibility of the power converter can be improved.

In some possible embodiments of the second aspect, the first AC-DC conversion circuit includes a first rectifying device, a second rectifying device, a third rectifying device, and a fourth rectifying device. The first rectifying device and the third rectifying device are connected in series and then connected in parallel to output ends of the first AC-DC conversion circuit. One end of the second rectifying device is connected to one end of a first sub secondary-side winding of the at least two sub secondary-side windings, and the other end of the second rectifying device is connected to the output end of the first AC-DC conversion circuit. One end of the fourth rectifying device is connected to one end of a second sub secondary-side winding of the at least two sub secondary-side windings, and the other end of the fourth rectifying device is connected to the output end of the first AC-DC conversion circuit. A common connection end of the first sub secondary-side winding and the second sub secondary-side winding is connected to a series connection end of the first rectifying device and the third rectifying device.

In this solution, the quantity of turns of the secondary-side winding of the transformer is adjusted to match the excitation voltage input to the primary-side winding of the transformer. When there are two excitation voltages, the first rectifying device to the fourth rectifying device may be disposed in the first AC-DC conversion circuit, to implement rectification on currents that are output by the transformer and that have different current flow directions.

In some possible embodiments of the second aspect, the power converter further includes a capacitor connected in series with the transformer and/or an inductor connected in series with the transformer.

In this application, the capacitor connected in series with the transformer is disposed to resolve a problem of bias excitation caused by a case that at least two different excitation voltages are input to the transformer. In addition, in this solution, the inductor connected in series with the transformer is disposed, to implement voltage stability.

According to a third aspect, this application further provides a power supply, including a direct current source and a power converter. The power converter includes a direct current DC-alternating current AC conversion circuit, a transformer, and a first AC-DC conversion circuit. The direct current source is configured to supply power to the DC-AC conversion circuit. The DC-AC conversion circuit is coupled to the first AC-DC conversion circuit through the transformer.

The DC-AC conversion circuit includes at least three output connection ends. A primary-side winding of the transformer includes at least two sub primary-side windings. The at least two sub primary-side windings include at least three primary-side winding connection ends. At least two adjacent sub primary-side windings share one primary-side winding connection end. The at least three primary-side winding connection ends are connected to the at least three output connection ends of the DC-AC conversion circuit in a one-to-one correspondence manner. The DC-AC conversion circuit is configured to generate at least two different excitation voltages in a time-division manner. One excitation voltage is correspondingly output to one sub primary-side winding. A quantity of turns of the sub primary-side winding is correspondingly adjusted based on a change of the input excitation voltage.

In some possible embodiments of the third aspect, the direct current source includes a DC-DC conversion circuit. The DC-DC conversion circuit includes at least one of the following: a Boost circuit, a Buck circuit, a Buck-Boost circuit of a positive output type, a single ended primary inductor converter SEPIC circuit, and a dual-SEPIC circuit.

In some possible embodiments of the third aspect, the direct current source includes an alternating current source and a second AC-DC conversion circuit; and the second AC-DC conversion circuit is configured to convert an alternating current provided by the alternating current source into a direct current, to supply power to the DC-AC conversion circuit.

According to a fourth aspect, this application further provides a power supply, including a direct current source and a power converter. The power converter includes a direct current DC-alternating current AC conversion circuit, a transformer, and a first AC-DC conversion circuit. The direct current source is configured to supply power to the DC-AC conversion circuit. The DC-AC conversion circuit is coupled to the first AC-DC conversion circuit through the transformer.

The DC-AC conversion circuit is configured to generate at least two different excitation voltages in a time-division manner. A secondary-side winding of the transformer includes at least two sub secondary-side windings. The at least two sub secondary-side windings include at least three secondary-side winding connection ends. The at least two sub secondary-side windings share one secondary-side winding connection end. A quantity of turns of one sub secondary-side winding is correspondingly adjusted based on a change of an excitation voltage input to a primary-side winding of the transformer. The first AC-DC conversion circuit includes at least three input connection ends. The at least three input connection ends are connected to the at least three secondary-side winding connection ends in a one-to-one correspondence manner.

In some possible embodiments of the fourth aspect, the direct current source includes a DC-DC conversion circuit. The DC-DC conversion circuit includes at least one of the following: a Boost circuit, a Buck circuit, a Buck-Boost circuit of a positive output type, a single ended primary inductor converter SEPIC circuit, and a dual-SEPIC circuit.

In some possible embodiments of the fourth aspect, the direct current source includes an alternating current source and a second AC-DC conversion circuit; and the second AC-DC conversion circuit is configured to convert an alternating current provided by the alternating current source into a direct current, to supply power to the DC-AC conversion circuit.

### BRIEF DESCRIPTION OF DRAWINGS

The following describes accompanying drawings used in embodiments of this application.
FIG. 1 is a schematic diagram of a structure of a power supply according to an embodiment of this application;
FIG. 2 is a schematic diagram of a structure of a power converter according to an embodiment of this application;
FIG. 3 is a schematic diagram of a structure of another power converter according to an embodiment of this application;
FIG. 4a is a schematic diagram of a structure of another power converter according to an embodiment of this application;
FIG. 4b is a schematic diagram of a structure of another power converter according to an embodiment of this application;
FIG. 5a is a schematic diagram of a structure of another power converter according to an embodiment of this application;
FIG. 5b is a schematic diagram of a structure of another power converter according to an embodiment of this application;
FIG. 5c is a schematic diagram of a structure of another power converter according to an embodiment of this application;
FIG. 6 is a schematic diagram of a structure of another power converter according to an embodiment of this application;
FIG. 7 is a schematic diagram of a structure of another power converter according to an embodiment of this application; and
FIG. 8 is a schematic diagram of a structure of a power supply according to an embodiment of this application.

### DESCRIPTION OF EMBODIMENTS

The following describes technical solutions of this application with reference to accompanying drawings.

In embodiments of this application, the word "example", "for example", or the like is used to represent giving an example, an illustration, or a description. Any embodiment or design scheme described as "example" or "for example" in this application should not be construed as being more preferred or having more advantages than another embodiment or design scheme. To be specific, use of the word "example", "for example", or the like is intended to present a related concept in a specific manner.

In embodiments of this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

In addition, unless otherwise stated, ordinal numbers such as "first" and "second" in embodiments of this application are used to distinguish between a plurality of objects, but are not intended to limit an order, a time sequence, priorities, or importance of the plurality of objects. For example, a first circuit and a second circuit are merely for ease of description, but do not indicate different structures, importance degrees, or the like of the first circuit and the second circuit. In some embodiments, the first circuit and the second circuit may be alternatively a same circuit.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

In a conventional technology, voltage regulation flexibility of a DC-DC converter is low. On this basis, this application provides a power converter, to effectively improve voltage regulation flexibility of the power converter.

The following specifically describes a power supply in this application.

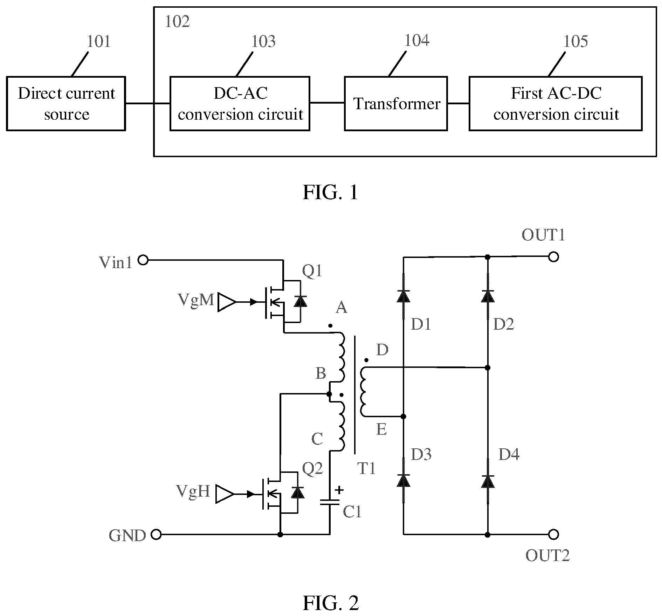

FIG. 1 is a schematic diagram of a structure of a power supply according to an embodiment of this application. In this embodiment of this application, the power supply includes a direct current source 101 and a power converter 102. The direct current source 101 is configured to supply power to the power converter 102.

For example, the power converter 102 includes a DC-AC conversion circuit 103, a transformer 104, and a first AC-DC conversion circuit 105. The DC-AC conversion circuit 103 is configured to generate at least two different excitation voltages in a time-division manner. The DC-AC conversion circuit 103 is coupled to the first AC-DC conversion circuit 105 through the transformer 104. An output end of the first AC-DC conversion circuit 105 is used as an output end of the power converter 102, and may be connected to another circuit or load to supply power to the another circuit or load. The direct current source 101 is configured to supply power to the DC-AC conversion circuit 103. For example, the transformer 104 includes a primary-side winding and a secondary-side winding.

Further, the power converter 102 further includes a capacitor. The capacitor is connected in series with the transformer 104. The capacitor may be directly connected in series with the transformer 104. Alternatively, the capacitor may be connected in series with the transformer 104 through another device. For example, the capacitor may be connected in series on a primary-side winding side of the transformer 104, or connected in series on a secondary-side winding side of the transformer 104. For example, the capacitor connected in series with the transformer 104 is disposed to avoid bias excitation caused by the at least two different excitation voltages. In this case, the capacitor may be referred to as a bias correction capacitor.

Further, for example, when the bias correction capacitor is connected in series on the primary-side winding side of the transformer 104, the DC-AC conversion circuit 103 is coupled to the transformer 104 through the bias correction capacitor. When the bias correction capacitor is connected in series on the secondary-side winding side of the transformer 104, the transformer 104 is coupled to the first AC-DC conversion circuit through the bias correction capacitor.

In an example, to resolve the problem of low voltage regulation flexibility of the power converter, on the primary-side winding side of the transformer 104, excitation is correspondingly performed on windings having different quantities of turns in the primary-side winding in a matched manner based on different excitation voltages generated by the DC-AC conversion circuit 103, to adjust currents and energy magnitudes of different excitation voltages input to the transformer. Therefore, voltage regulation flexibility of the power converter 102 can be improved.

Specifically, the DC-AC conversion circuit 103 includes at least three output connection ends. The primary-side winding of the transformer 104 includes at least two sub primary-side windings. The at least two sub primary-side windings include at least three primary-side winding connection ends. The at least two sub primary-side windings share one primary-side winding connection end. The at least three primary-side winding connection ends are configured to divide the primary-side winding into the at least two sub primary-side windings. The sub primary-side windings are the entire or a part of the primary-side winding. One excitation voltage of the DC-AC conversion circuit 103 is correspondingly output to one sub primary-side winding. A quantity of turns of the sub primary-side winding is correspondingly adjusted based on a change of the corresponding input excitation voltage. In addition, the at least three output connection ends of the DC-AC conversion circuit 103 are connected to the at least three primary-side winding connection ends in a one-to-one correspondence manner.

In the following descriptions, an example in which the DC-AC conversion circuit generates two different excitation voltages and the primary-side winding is divided into two sub primary-side windings is used to describe solutions in embodiments of this application in detail. The solutions in embodiments of this application are also applicable to a case in which the DC-AC conversion circuit generates at least three different excitation voltages, and the primary-side winding is divided into at least three sub primary-side windings. Refer to related descriptions of the case in which two different excitation voltages are generated. Details are not described again.

FIG. 2 is a schematic diagram of a structure of a power converter according to an embodiment of this application. For example, in this embodiment of this application, the DC-AC conversion circuit 103 includes a first switch Q1 and a second switch Q2.

Specifically, a primary-side winding of a transformer T1 has three primary-side winding connection ends A, B, and C. A winding between the primary-side winding connection end A and the primary-side winding connection end C is used as a first sub primary-side winding of at least two sub primary-side windings. A winding between the primary-side winding connection end B and the primary-side winding connection end C is used as a second sub primary-side winding of the at least two sub primary-side windings. A common connection end of the first sub primary-side winding and the second sub primary-side winding is the primary-side winding connection end C. One end of the first switch Q1 is connected to a first direct current source Vin1, and the other end of the first switch Q1 is connected to the primary-side winding connection end A. One end of the second switch Q2 is connected to the primary-side winding connection end B, and the other end of the second switch Q2 is grounded. The primary-side winding connection end C is grounded through a bias correction capacitor C1.

When the first switch Q1 is turned on and the second switch Q2 is turned off, the first direct current source Vin1 inputs a first excitation voltage to the transformer T1 after undergoing voltage division through the first switch Q1. A current of the first direct current source Vin1 passes through the first switch Q1 and the entire primary-side winding (that is, from the primary-side winding connection end A to the primary-side winding connection end C) and then flows into the bias correction capacitor C1. In this case, the bias correction capacitor C1 is charged.

When the first switch Q1 is turned off and the second switch Q2 is turned on, the bias correction capacitor C1 starts to discharge to generate a second excitation voltage. In this case, a discharge current passes through the primary-side winding connection end C, the primary-side winding connection end B, and the second switch Q2 and then flows back to the bias correction capacitor C1.

It can be learned that, in FIG. 2, the first direct current source Vin1 and the bias correction capacitor C1 (which is understood as an energy storage capacitor) are used as different power supplies, and two different excitation voltages are provided after voltage division.

In addition, although FIG. 2 shows only one winding tap (namely, the primary-side winding connection end B), a quantity of winding taps may also be increased. For example, a new tap is added between the primary-side winding connection end A and the primary-side winding connection end B as a primary-side winding connection end D. A winding between the primary-side winding connection end D and the primary-side winding connection end C may be used as the first sub primary-side winding according to an actual requirement, and a winding between the primary-side winding connection end B and the primary-side winding connection end C is used as the second sub primary-side winding. In this case, the primary-side winding connection end C is used as a common connection end of the first sub primary-side winding and the second sub primary-side winding. For another example, a new tap is added between the primary-side winding connection end B and the primary-side winding connection end C as a primary-side winding connection end D. A winding between the primary-side winding connection end A and the primary-side winding connection end D may be used as the first sub primary-side winding according to an actual requirement, and a winding between the primary-side winding connection end B and the primary-side winding connection end D is used as the second sub primary-side winding. In this case, the primary-side winding connection end D is used as a common connection end of the first sub primary-side winding and the second sub primary-side winding.

Still refer to FIG. 2. In this embodiment, the first AC-DC conversion circuit 105 includes a first rectifying device D1, a second rectifying device D2, a third rectifying device D3, and a fourth rectifying device D4, and implements rectification by using the first rectifying device D1 to the fourth rectifying device D4, that is, converts an alternating current into a direct current.

The first rectifying device D1 and the third rectifying device D3 are connected in series and then connected in parallel to output ends OUT1 and OUT2 of the first AC-DC conversion circuit 105. The second rectifying device D2 and the fourth rectifying device D4 are connected in series and then connected in parallel to the output ends OUT1 and OUT2 of the first AC-DC conversion circuit 105. A secondary-side winding connection end D and a secondary-side winding connection end E of the transformer T1 are connected in parallel between a series connection end of the first rectifying device D1 and the third rectifying device D3 and a series connection end of the second rectifying device D2 and the fourth rectifying device D4.

When the first switch Q1 is turned on and the second switch Q2 is turned off, the current of the first direct current source Vin1 flows from the primary-side winding connection end A to the primary-side winding connection end C. In this case, the second rectifying device D2 and the third rectifying device D3 are used to rectify an output current of a secondary-side winding of the transformer T1. When the first switch Q1 is turned off and the second switch Q2 is turned on, the discharge current of the bias correction capacitor C1 flows from the primary-side winding connection end C to the primary-side winding connection end B. In this case, the first rectifying device D1 and the fourth rectifying device D4 are used to rectify the output current of the secondary-side winding of the transformer T1. It can be learned that, in this embodiment of this application, the first rectifying device to the fourth rectifying device are disposed, to implement rectification on currents that are output by the transformer and that have different current flow directions.

In the description of this application, at least one of the first rectifying device, the second rectifying device, the third rectifying device, and the fourth rectifying device may be implemented by using at least one of a diode, a switching transistor, or the like. The switching transistor includes at least one of a transistor, a metal-oxide-semiconductor field-effect transistor (Metal-Oxide-Semiconductor Field-Effect Transistor, MOSFET, MOS for short), or the like. The transistor includes a PNP transistor and an NPN transistor. The MOS transistor includes an NMOS transistor and a PMOS transistor. For example, the first rectifying device to the fourth rectifying device in FIG. 2 are implemented by using diodes.

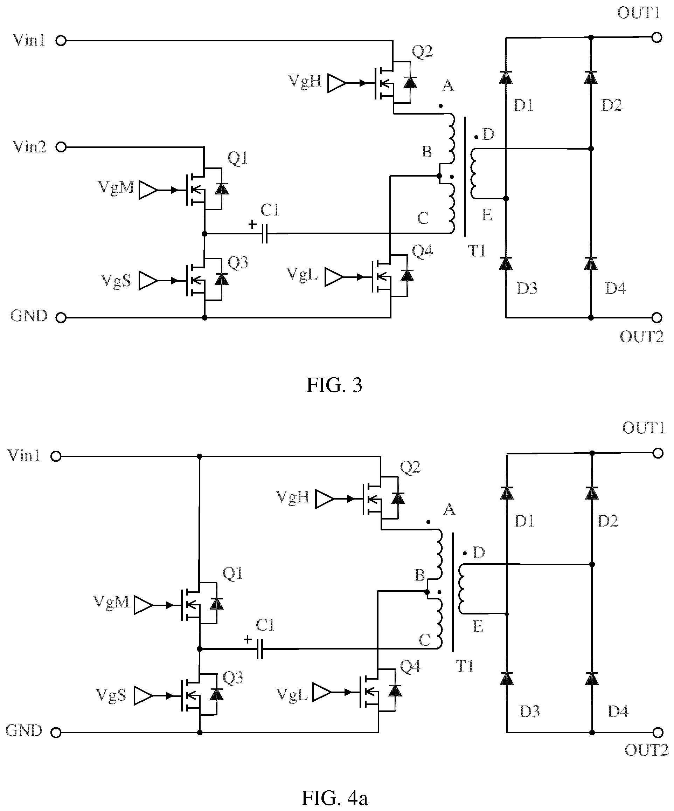

FIG. 3 is a schematic diagram of a structure of another power converter according to an embodiment of this application. For example, in FIG. 3, the DC-AC conversion circuit 103 includes a first switch Q1, a second switch Q2, a third switch Q3, and a fourth switch Q4.

Specifically, same as FIG. 2, a primary-side winding of a transformer T1 in FIG. 3 has three primary-side winding connection ends A, B, and C. A winding between the primary-side winding connection end A and the primary-side winding connection end C is used as a first sub primary-side winding of at least two sub primary-side windings, and a winding between the primary-side winding connection end B and the primary-side winding connection end C is used as a second sub primary-side winding of the at least two sub primary-side windings. A common connection end of the first sub primary-side winding and the second sub primary-side winding is the primary-side winding connection end C.

The first switch Q1 and the third switch Q3 are connected in series and then connected to a second direct current source Vin2. One end of the second switch Q2 is connected to a first direct current source Vin1, and the other end of the second switch Q2 is used as an output connection end of the DC-AC conversion circuit 103 and is connected to the primary-side winding connection end A of the first sub primary-side winding. One end of the fourth switch Q4 is connected to the primary-side winding connection end B of the second sub primary-side winding, and the other end of the fourth switch Q4 is grounded. The primary-side winding connection end C is connected to a series connection end of the first switch Q1 and the third switch Q3 through a bias correction capacitor C1.

When the first switch Q1 and the fourth switch Q4 are controlled to be turned off, and the second switch Q2 and the third switch Q3 are controlled to be turned on, the first direct current source Vin1 inputs a first excitation voltage to the transformer T1 after undergoing voltage division through the second switch Q2. A current of the first direct current source Vin1 passes through the second switch Q2 and the entire primary-side winding (that is, from the primary-side winding connection end A to the primary-side winding connection end C), flows into the bias correction capacitor C1, and then flows into a ground cable after passing through the third switch Q3.

When the first switch Q1 and the fourth switch Q4 are controlled to be turned on, and the second switch Q2 and the third switch Q3 are controlled to be turned off, the second direct current source Vin2 inputs a second excitation voltage to the transformer T1 after undergoing voltage division through the first switch Q1 and the bias correction capacitor C1. A current of the second direct current source Vin2 passes through the first switch Q1, the bias correction capacitor C1, the primary-side winding connection end C, the primary-side winding connection end B, and the fourth switch Q4 and then flows into the ground cable.

It can be learned that, in FIG. 3, the first switch to the fourth switch are disposed to implement that the first direct current source Vin1 and the second direct current source Vin2 are used as different power supplies in a time-division manner. The different power supplies may provide two different excitation voltages after voltage division. In addition, the first AC-DC conversion circuit 105 in FIG. 3 has a same structure as the first AC-DC conversion circuit shown in FIG. 2. Details are not described again.

In the description of this application, at least one of the first switch, the second switch, the third switch, and the fourth switch may be implemented by using at least one of a manual switch, a relay, a switching transistor, and the like. The switching transistor includes at least one of a transistor, an MOS transistor, or the like. The transistor includes a PNP transistor and an NPN transistor. The MOS transistor includes an NMOS transistor and a PMOS transistor. The switches in FIG. 2 and FIG. 3 are implemented by using NMOS transistors, where VgM, VgH, VgS, and VgL are base control signals of respective corresponding NMOS transistors.

FIG. 4a is a schematic diagram of a structure of another power converter according to an embodiment of this application. For example, in FIG. 4a, the DC-AC conversion circuit 103 includes a first switch Q1, a second switch Q2, a third switch Q3, and a fourth switch Q4.

Specifically, same as FIG. 2, a primary-side winding of a transformer T1 in FIG. 4a has three primary-side winding connection ends A, B, and C. A winding between the primary-side winding connection end A and the primary-side winding connection end C is used as a first sub primary-side winding of at least two sub primary-side windings, and a winding between the primary-side winding connection end B and the primary-side winding connection end C is used as a second sub primary-side winding of the at least two sub primary-side windings. A common connection end of the first sub primary-side winding and the second sub primary-side winding is the primary-side winding connection end C. The first switch Q1 and the third switch Q3 are connected in series and then connected to a first direct current source Vin1. One end of the second switch Q2 is connected to a first direct current source Vin1, and the other end of the second switch Q2 is used as an output connection end of the DC-AC conversion circuit 103 and is connected to the primary-side winding connection end A of the first sub primary-side winding. One end of the fourth switch Q4 is connected to the primary-side winding connection end B of the second sub primary-side winding, and the other end of the fourth switch Q4 is grounded. The primary-side winding connection end C is connected to a series connection end of the first switch Q1 and the third switch Q3 through a bias correction capacitor.

A duty cycle of the first switch Q1 and the fourth switch Q4 is different from a duty cycle of the second switch Q2 and the third switch Q3. This may be understood as that in a working time sequence, front and back duty cycles are asymmetric. The duty cycle of the first switch Q1 and the fourth switch Q4 means first time when the first switch Q1 and the fourth switch Q4 are simultaneously turned on. The duty cycle of the second switch Q2 and the third switch Q3 means first time when the second switch Q2 and the third switch Q3 are simultaneously turned on. That the duty cycles are different means that the first switch Q1 to the fourth switch Q4 are not simultaneously turned on, and the first time is different from the first time. A time length of the first time is greater than a time length of the second time. Alternatively, a time length of the second time is greater than a time length of the first time. This may be set according to an actual requirement.

Working logic of the DC-AC conversion circuit 103 shown in FIG. 4a is similar to working logic of the DC-AC conversion circuit 103 shown in FIG. 3. When the first switch Q1 and the fourth switch Q4 are controlled to be turned off, and the second switch Q2 and the third switch Q3 are controlled to be turned on, the first direct current source Vin1 inputs a first excitation voltage to the transformer T1 after undergoing voltage division through the second switch Q2. A current of the first direct current source Vin1 passes through the second switch Q2 and the entire primary-side winding (that is, from the primary-side winding connection end A to the primary-side winding connection end C), flows into the bias correction capacitor C1, and then flows into a ground cable after passing through the third switch Q3.

When the first switch Q1 and the fourth switch Q4 are controlled to be turned on, and the second switch Q2 and the third switch Q3 are controlled to be turned off, the first direct current source Vin1 inputs a second excitation voltage to the transformer T1 after undergoing voltage division through the first switch Q1 and the bias correction capacitor C1. A current of the first direct current source Vin1 passes through the first switch Q1, the bias correction capacitor C1, the primary-side winding connection end C, the primary-side winding connection end B, and the fourth switch Q4 and then flows into the ground cable.

It can be learned that, in FIG. 4a, the first direct current source Vin1 is used as a power supply, the duty cycles of the first switch to the fourth switch are controlled to be different, and two different excitation voltages are provided after voltage division. In addition, the first AC-DC conversion circuit 105 in FIG. 4a has a same structure as the first AC-DC conversion circuit shown in FIG. 2. Details are not described again.

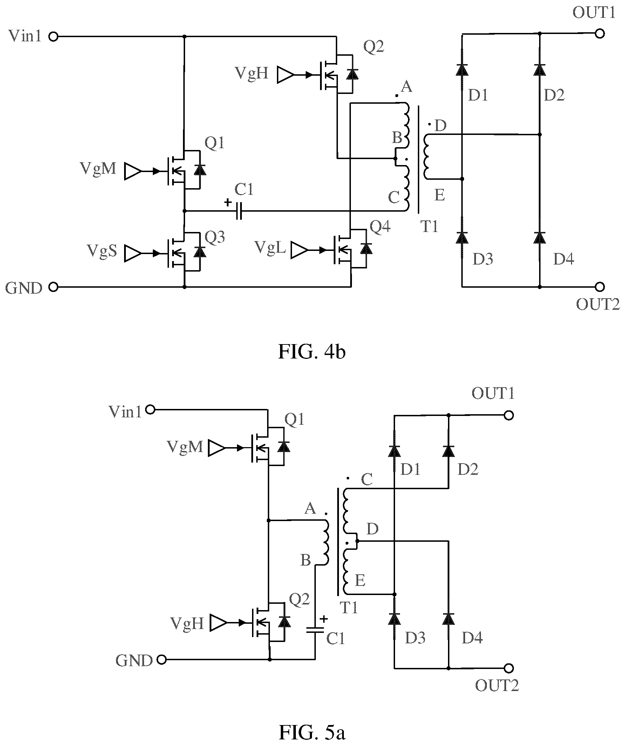

Locations at which the primary-side winding connection end A, the primary-side winding connection end B, and the primary-side winding connection end C are connected to the three output connection ends of the DC-AC conversion circuit 103 may be modified according to an actual requirement. For example, refer to FIG. 4b. FIG. 4b is a schematic diagram of a structure of another power converter according to an embodiment of this application. One end of the second switch Q2 is connected to the first direct current source Vin1, and the other end of the second switch Q2 is connected to the primary-side winding connection end B. One end of the fourth switch Q4 is connected to the primary-side winding connection end A, and the other end of the fourth switch Q4 is grounded. The primary-side winding connection end C is used as a common connection end and connected to a series connection end of the first switch Q1 and the third switch Q3.

In another example, in this embodiment of this application, to resolve the problem of low voltage regulation flexibility of the power converter, on the secondary-side winding side of the transformer 104, a quantity of turns of the secondary-side winding that plays a role of voltage transformation is adjusted based on different excitation voltages input to the primary-side winding, to adjust currents and energy magnitudes of different excitation voltages input to the transformer. Therefore, voltage regulation flexibility of the power converter 102 can be improved.

Specifically, the secondary-side winding of the transformer 104 includes at least two sub secondary-side windings. The at least two sub secondary-side windings include at least three secondary-side winding connection ends. The at least two sub secondary-side windings share one secondary-side winding connection end. The at least three secondary-side winding connection ends are configured to divide the secondary-side winding into at least two sub secondary-side windings. A quantity of turns of one sub secondary-side winding is correspondingly adjusted based on a change of an excitation voltage input to the primary-side winding of the transformer. The sub secondary-side windings are the entire or a part of the secondary-side winding. The first AC-DC conversion circuit includes at least three input connection ends. The at least three input connection ends are connected to the at least three secondary-side winding connection ends in a one-to-one correspondence manner.

FIG. 5a is a schematic diagram of a structure of another power converter according to an embodiment of this application. For example, in FIG. 5a, the first AC-DC conversion circuit 105 includes a first rectifying device D1, a second rectifying device D2, a third rectifying device D3, and a fourth rectifying device D4.

Specifically, a secondary-side winding of a transformer T1 has three secondary-side winding connection ends C, D, and E. A winding between the secondary-side winding connection end C and the secondary-side winding connection end E is used as a first sub secondary-side winding of at least two sub secondary-side windings, and a winding between the secondary-side winding connection end D and the secondary-side winding connection end E is used as a second sub secondary-side winding of the at least two sub secondary-side windings. A common connection end of the first sub secondary-side winding and the second sub secondary-side winding is the secondary-side winding connection end E. The first rectifying device D1 and the third rectifying device D3 are connected in series and then connected in parallel to output ends OUT1 and OUT2 of the first AC-DC conversion circuit 105. One end of the second rectifying device D2 is connected to the secondary-side winding connection end C of the first sub secondary-side winding, and the other end of the second rectifying device D2 is connected to the output end OUT1 of the first AC-DC conversion circuit 105. One end of the fourth rectifying device D4 is connected to the secondary-side winding connection end D of the second sub secondary-side winding, and the other end of the fourth rectifying device D4 is connected to the output end OUT2 of the first AC-DC conversion circuit 105. The secondary-side winding connection end E is connected to a series connection end of the first rectifying device D1 and the third rectifying device D3.

In addition, the DC-AC conversion circuit 103 in FIG. 5a includes a first switch Q1 and a second switch Q2. The first switch Q1 and the second switch Q2 are connected in series and then connected in parallel to a first direct current source Vin1. A primary-side winding connection end A of the transformer T1 is connected to a series connection end of the first switch Q1 and the second switch Q2, and a primary-side winding connection end B is grounded through a bias correction capacitor C1.

It can be learned from FIG. 5a that, when the first switch Q1 is turned on and the second switch Q2 is turned off, the first direct current source Vin1 inputs a first excitation voltage to the transformer T1 after undergoing voltage division through the first switch Q1. A current of the first direct current source Vin1 passes through the first switch Q1 and a primary-side winding and then flows into the bias correction capacitor C1. In this case, the bias correction capacitor C1 is charged. In this case, voltage transformation is performed through the first sub secondary-side winding, and rectification is performed through the second rectifying device D2 and the third rectifying device D3. When the first switch Q1 is turned off and the second switch Q2 is turned on, the bias correction capacitor C1 starts to discharge to generate a second excitation voltage. In this case, the current passes through the primary-side winding and the second switch Q2 and then flows back to the bias correction capacitor C1. In this case, voltage transformation is performed through the second sub secondary-side winding, and rectification is performed through the first rectifying device D1 and the fourth rectifying device D4. In this embodiment of this application, different excitation voltages input by the primary-side winding may be matched, and voltage transformation is performed by using sub secondary-side windings having different quantities of turns, thereby effectively improving voltage adjustment flexibility of the power converter.

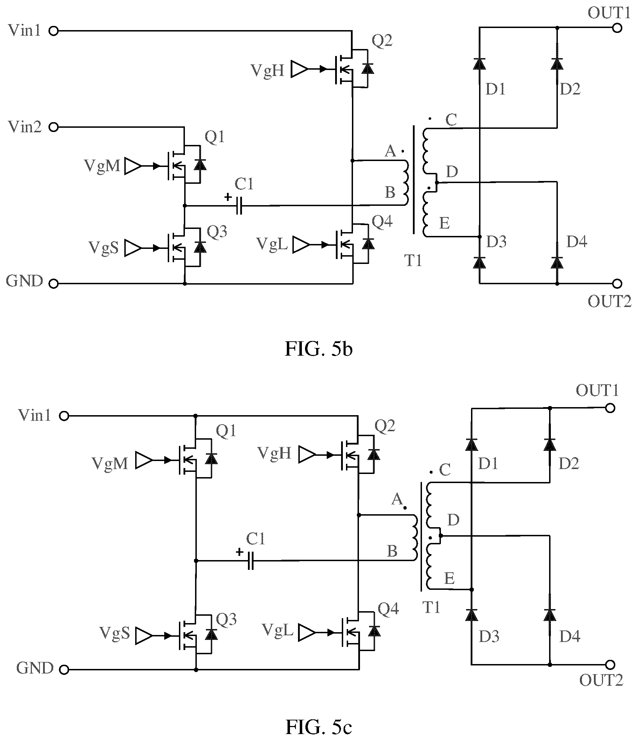

FIG. 5b is a schematic diagram of a structure of another power converter according to an embodiment of this application. For example, in FIG. 5b, an example of another DC-AC conversion circuit 103 is provided. The DC-AC conversion circuit 103 includes a first switch Q1, a second switch Q2, a third switch Q3, and a fourth switch Q4. The first switch Q1 and the third switch Q3 are connected in series and then connected to a second direct current source Vin2. The second switch Q2 and the fourth switch Q4 are connected in series and then connected to a first direct current source Vin1. A primary-side winding connection end A is connected to a series connection end of the second switch Q2 and the fourth switch Q4. A primary-side winding connection end B is connected to a series connection end of the first switch Q1 and the third switch Q3 through a bias correction capacitor C1.

When the first switch Q1 and the fourth switch Q4 are controlled to be turned off, and the second switch Q2 and the third switch Q3 are controlled to be turned on, the first direct current source Vin1 inputs a first excitation voltage to a transformer T1 after undergoing voltage division through the second switch Q2. A current of the first direct current source Vin1 passes through the second switch Q2 and a primary-side winding, flows into the bias correction capacitor C1, and then flows into a ground cable after passing through the third switch Q3. In this case, voltage transformation is performed through a first sub secondary-side winding, and rectification is performed through a second rectifying device D2 and a third rectifying device D3.

When the first switch Q1 and the fourth switch Q4 are controlled to be turned on, and the second switch Q2 and the third switch Q3 are controlled to be turned off, the second direct current source Vin2 inputs a second excitation voltage to the transformer T1 after undergoing voltage division through the first switch Q1 and the bias correction capacitor C1. A current of the second direct current source Vin2 passes through the first switch Q1, the bias correction capacitor C1, the primary-side winding, and the fourth switch Q4 and then flows into the ground cable. In this case, voltage transformation is performed through a second sub secondary-side winding, and rectification is performed through a first rectifying device D1 and a fourth rectifying device D4.

FIG. 5c is a schematic diagram of a structure of another power converter according to an embodiment of this application. For example, in FIG. 5c, an example of another DC-AC conversion circuit 103 is provided. The DC-AC conversion circuit 103 includes a first switch Q1, a second switch Q2, a third switch Q3, and a fourth switch Q4. The first switch Q1 and the third switch Q3 are connected in series and then connected to a first direct current source Vin1. The second switch Q2 and the fourth switch Q4 are connected in series and then connected to the first direct current source Vin1. A primary-side winding connection end A is connected to a series connection end of the second switch Q2 and the fourth switch Q4. A primary-side winding connection end B is connected to a series connection end of the first switch Q1 and the third switch Q3 through a bias correction capacitor C1. A duty cycle of the first switch Q1 and the fourth switch Q4 is different from a duty cycle of the second switch Q2 and the third switch Q3, to output two different excitation voltages.

When the first switch Q1 and the fourth switch Q4 are controlled to be turned off, and the second switch Q2 and the third switch Q3 are controlled to be turned on, the first direct current source Vin1 inputs a first excitation voltage to a transformer T1 after undergoing voltage division through the second switch Q2. A current of the first direct current source Vin1 passes through the second switch Q2 and a primary-side winding, flows into the bias correction capacitor C1, and then flows into a ground cable after passing through the third switch Q3. In this case, voltage transformation is performed through a first sub secondary-side winding, and rectification is performed through a second rectifying device D2 and a third rectifying device D3.

When the first switch Q1 and the fourth switch Q4 are controlled to be turned on, and the second switch Q2 and the third switch Q3 are controlled to be turned off, the first direct current source Vin1 inputs a second excitation voltage to the transformer T1 after undergoing voltage division through the first switch Q1 and the bias correction capacitor C1. A current of the first direct current source Vin1 passes through the first switch Q1, the bias correction capacitor C1, the primary-side winding, and the fourth switch Q4 and then flows into the ground cable. In this case, voltage transformation is performed through a second sub secondary-side winding, and rectification is performed through a first rectifying device D1 and a fourth rectifying device D4.

In another example, in this embodiment of this application, based on different excitation voltages, both a quantity of turns of the primary-side winding and a quantity of turns of a secondary-side winding that play a role of voltage transformation may be adjusted at the same time, to adjust currents and energy magnitudes of different excitation voltages input to the transformer. Therefore, voltage adjustment flexibility of the power converter 102 can be improved.

In this case, the primary-side winding of the transformer 104 includes at least two sub primary-side windings. The at least two sub primary-side windings include at least three primary-side winding connection ends. The at least two sub primary-side windings share one primary-side winding connection end. The at least three primary-side winding connection ends are configured to divide the primary-side winding into the at least two sub primary-side windings. One excitation voltage of the DC-AC conversion circuit 103 is correspondingly output to one sub primary-side winding. In addition, the DC-AC conversion circuit 103 includes at least three output connection ends. The at least three output connection ends are connected to the at least three primary-side winding connection ends in a one-to-one correspondence manner. In addition, the secondary-side winding of the power transformer includes at least two sub secondary-side windings. The at least two sub secondary-side windings include at least three secondary-side winding connection ends. The at least two sub secondary-side windings share one secondary-side winding connection end. The at least three secondary-side winding connection ends are configured to divide the secondary-side winding into at least two sub secondary-side windings. The at least two sub secondary-side windings are in a one-to-one correspondence with the at least two sub primary-side windings. A quantity of turns of each sub primary-side winding and a quantity of turns of the corresponding sub secondary-side winding are correspondingly adjusted based on a change of an excitation voltage input to the corresponding sub primary-side winding. The first AC-DC conversion circuit includes at least three input connection ends. The at least three input connection ends are connected to the at least three secondary-side winding connection ends in a one-to-one correspondence manner.

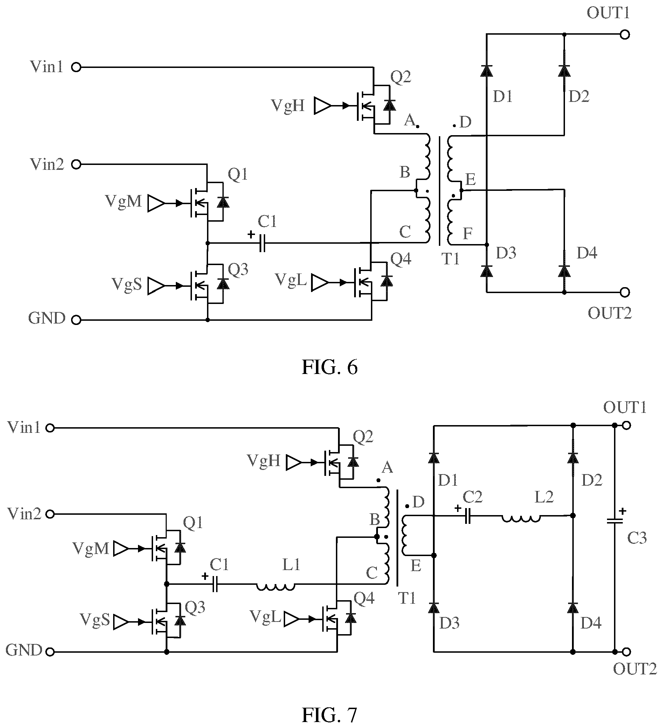

FIG. 6 is a schematic diagram of a structure of another power converter according to an embodiment of this application. For example, in FIG. 6, the DC-AC conversion circuit 103 includes a first switch Q1, a second switch Q2, a third switch Q3, and a fourth switch Q4. In FIG. 6, a primary-side winding of a transformer T1 has three primary-side winding connection ends A, B, and C. A winding between the primary-side winding connection end A and the primary-side winding connection end C is used as a first sub primary-side winding of at least two sub primary-side windings. A winding between the primary-side winding connection end B and the primary-side winding connection end C is used as a second sub primary-side winding of the at least two sub primary-side windings. A common connection end of the first sub primary-side winding and the second sub primary-side winding is the primary-side winding connection end C. Further, the first switch Q1 and the third switch Q3 are connected in series and then connected to a second direct current source Vin2. One end of the second switch Q2 is connected to a first direct current source Vin1, and the other end of the second switch Q2 is used as an output connection end of the DC-AC conversion circuit 103 and is connected to the primary-side winding connection end A of the first sub primary-side winding. One end of the fourth switch Q4 is connected to the primary-side winding connection end B of the second sub primary-side winding, and the other end of the fourth switch Q4 is grounded. The primary-side winding connection end C is connected to a series connection end of the first switch Q1 and the third switch Q3 through a bias correction capacitor C1.

In addition, a secondary-side winding of the transformer T1 has three secondary-side winding connection ends D, E, and F. A winding between the secondary-side winding connection end D and the secondary-side winding connection end F is used as a first sub secondary-side winding of at least two sub secondary-side windings. A winding between the secondary-side winding connection end E and the secondary-side winding connection end F is used as a second sub secondary-side winding of the at least two sub secondary-side windings. A common connection end of the first sub secondary-side winding and the second sub secondary-side winding is the secondary-side winding connection end F. The first rectifying device D1 and the third rectifying device D3 are connected in series and then connected in parallel to output ends OUT1 and OUT2 of the first AC-DC conversion circuit 105. One end of a second rectifying device D2 is connected to the secondary-side winding connection end D of the first sub secondary-side winding, and the other end of the second rectifying device D2 is connected to the output end OUT1 of the first AC-DC conversion circuit 105. One end of a fourth rectifying device D4 is connected to the secondary-side winding connection end E of the second sub secondary-side winding, and the other end of the fourth rectifying device D4 is connected to the output end OUT2 of the first AC-DC conversion circuit 105. The secondary-side winding connection end F is connected to a series connection end of the first rectifying device D1 and the third rectifying device D3.

For the power converter in any embodiment of this application, the power converter further includes an inductor connected in series with the transformer. In embodiments of this application, a quantity of capacitors and/or inductors connected in series with the transformer is not particularly limited, and may be set according to an actual requirement. For example, refer to FIG. 7. FIG. 7 is a schematic diagram of a structure of another power converter according to an embodiment of this application. A bias correction capacitor C1 is connected in series with an inductor L1. A DC-AC conversion circuit is coupled to a transformer T1 through the bias correction capacitor C1 and the inductor L1. The DC-AC conversion circuit includes a first switch Q1, a second switch Q2, a third switch Q3, and a fourth switch Q4. In this embodiment of this application, the bias correction capacitor C1 and the inductor L1 are disposed to reduce a switching loss of a switching device (for example, at least one switch in the first switch to the fourth switch) in the DC-AC conversion circuit, thereby helping reduce a loss of the DC-AC conversion circuit, and implementing voltage stability. For example, refer to FIG. 7. A capacitor C2 and an inductor L2 are connected in series. The transformer T1 is coupled to a first AC-DC conversion circuit through the capacitor C2 and the inductor L2. The first AC-DC conversion circuit includes a first rectifying device D1, a second rectifying device D2, a third rectifying device D3, and a fourth rectifying device D4. In this embodiment of this application, the capacitor C2 and the inductor L2 are disposed to adjust an output voltage of the first AC-DC conversion circuit, and the output voltage can be stabilized.

For the power converter in any embodiment of this application, the power converter further includes an output capacitor connected in parallel with the first AC-DC conversion circuit. The output capacitor is disposed to stabilize the output voltage of the first AC-DC conversion circuit. For example, refer to FIG. 7. The first AC-DC conversion circuit includes a first rectifying device D1, a second rectifying device D2, a third rectifying device D3, and a fourth rectifying device D4. The first AC-DC conversion circuit is connected in parallel with an output capacitor C3 to stabilize an output voltage of the first AC-DC conversion circuit.

For the power supply in any embodiment of this application, the direct current source includes a DC-DC conversion circuit. The DC-DC conversion circuit includes at least one of the following: a Boost circuit, a Buck circuit, a Buck-Boost circuit of a positive output type, a single ended primary inductor converter (Single Ended Primary Inductor Converter, SEPIC) circuit, and a dual-SEPIC circuit.

The Boost circuit is a switching direct current boost circuit, and can enable an output voltage to be higher than an input voltage. The Buck circuit is a buck chopper with an output voltage being lower than an input voltage. An output voltage of the Buck-Boost circuit may be lower than or higher than an input voltage. However, a polarity of the output voltage is opposite to that of the input voltage. The SEPIC circuit is a DC-DC circuit that allows an output voltage to be greater than, less than, or equal to an input voltage. The output voltage of the SEPIC circuit is controlled by a duty cycle of a switch (such as a transistor or an MOS transistor). In the SEPIC circuit, both a power supply current and a load current are continuous, thereby facilitating input filtering and output filtering. The dual-SEPIC circuit is also referred to as a Zeta circuit. The Zeta circuit is a DC-DC circuit that allows an output voltage to be greater than, less than, or equal to an input voltage. Both an input current and an output current of the Zeta circuit are discontinuous.

For example, for the power converter shown in FIG. 2, the first direct current source Vin1 may be implemented by using any one of the following: a Boost circuit, a Buck circuit, a Buck-Boost circuit of a positive output type, an SEPIC circuit, and a dual-SEPIC circuit.

For the power converter shown in FIG. 3, the first direct current source Vin1 may be implemented by using any one of the following: a Boost circuit, a Buck circuit, a Buck-Boost circuit of a positive output type, an SEPIC circuit, and a dual-SEPIC circuit; and the second direct current source Vin2 may be implemented by using any one of the following: a Boost circuit, a Buck circuit, a Buck-Boost circuit of a positive output type, an SEPIC circuit, a dual-SEPIC circuit.

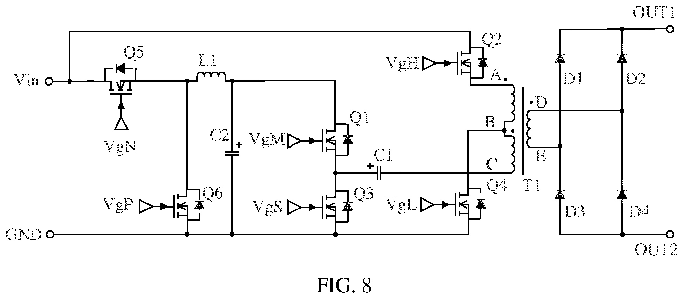

For example, for the power converter shown in FIG. 3, refer to FIG. 8. FIG. 8 is a schematic diagram of a structure of a power supply according to an embodiment of this application. A Boost circuit is used as the second direct current source Vin2. In FIG. 8, the Boost circuit is implemented by using a fifth switching transistor Q5, a sixth switching transistor Q6, an inductor L1, and a capacitor C2. An example in which the fifth switching transistor Q5 and the sixth switching transistor Q6 are implemented by using NMOS transistors is used. VgN and VgP are base control signals of the NMOS transistors corresponding to the fifth switching transistor Q5 and the sixth switching transistor Q6. A direct current source Vin is directly used as the first direct current source Vin1, and provides the first excitation voltage to the transformer T1 after undergoing voltage division through the second switch Q2. The Boost circuit is used as the second direct current source Vin2. After being processed by the Boost circuit, the direct current source Vin provides the second excitation voltage to the transformer T1 after undergoing voltage division through the first switch Q1 and the bias correction capacitor C1.

For the power supply in any embodiment of this application, the direct current source includes an alternating current source and a second AC-DC conversion circuit. The second AC-DC conversion circuit is configured to convert an alternating current provided by the alternating current source into a direct current, to supply power to the DC-AC conversion circuit. A specific circuit structure of the second AC-DC conversion circuit is not particularly limited, provided that AC-DC conversion can be implemented.

Certainly, for the power supply in any embodiment of this application, the direct current source includes an alternating current source, a second AC-DC conversion circuit, and a DC-DC conversion circuit. The second AC-DC conversion circuit is configured to convert an alternating current provided by the alternating current source into a direct current. The DC-DC conversion circuit is configured to convert a direct current output by the second AC-DC conversion circuit into another direct current, to supply power to the DC-AC conversion circuit.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, wherein the power converter comprises a direct current DC-alternating current AC conversion circuit, a transformer, and a first AC-DC conversion circuit, and the DC-AC conversion circuit is coupled to the first AC-DC conversion circuit through the transformer;
the DC-AC conversion circuit comprises at least three output connection ends;
a primary-side winding of the transformer comprises at least two sub primary-side windings, the at least two sub primary-side windings comprise at least three primary-side winding connection ends, the at least two sub primary-side windings share one primary-side winding connection end, and the at least three primary-side winding connection ends are connected to the at least three output connection ends of the DC-AC conversion circuit in a one-to-one correspondence manner; and
the DC-AC conversion circuit is configured to generate at least two different excitation voltages in a time-division manner, wherein one excitation voltage is correspondingly output to one sub primary-side winding, and a quantity of turns of the sub primary-side winding is correspondingly adjusted based on a change of the input excitation voltage.

2. The power converter according to claim 1, wherein the power converter further comprises a capacitor connected in series with the transformer.

3. The power converter according to claim 2, wherein the DC-AC conversion circuit comprises a first switch, a second switch, a third switch, and a fourth switch; and
the first switch and the third switch are connected in series and then connected to a second direct current source; one end of the second switch is connected to a first direct current source, and the other end of the second switch is used as an output connection end of the DC-AC conversion circuit and is connected to one end of a first sub primary-side winding of the at least two sub primary-side windings; one end of the fourth switch is connected to one end of a second sub primary-side winding of the at least two sub primary-side windings, and the other end of the fourth switch is grounded; and a common connection end of the first sub primary-side winding and the second sub primary-side winding is connected to a series connection end of the first switch and the third switch through the capacitor.

4. The power converter according to claim 2, wherein the DC-AC conversion circuit comprises a first switch, a second switch, a third switch, and a fourth switch; and
the first switch and the third switch are connected in series and then connected to a first direct current source; one end of the second switch is connected to the first direct current source, and the other end of the second switch is used as an output connection end of the DC-AC conversion circuit and is connected to one end of a first sub primary-side winding of the at least two sub primary-side windings; one end of the fourth switch is connected to one end of a second sub primary-side winding of the at least two sub primary-side windings, and the other end of the fourth switch is grounded; a common connection end of the first sub primary-side winding and the second sub primary-side winding is connected to a series connection end of the first switch and the third switch through the capacitor; and a duty cycle of the first switch and the fourth switch is different from a duty cycle of the second switch and the third switch.

5. The power converter according to claim 2, wherein the DC-AC conversion circuit comprises a first switch and a second switch; and
one end of the first switch is connected to a first direct current source, and the other end of the first switch is used as an output connection end of the DC-AC conversion circuit and is connected to one end of a first sub primary-side winding of the at least two sub primary-side windings; one end of the second switch is connected to one end of a second sub primary-side winding of the at least two sub primary-side windings, and the other end of the second switch is grounded; and a common connection end of the first sub primary-side winding and the second sub primary-side winding is grounded through the capacitor.

6. The power converter according to any one of claims 1 to 5, wherein the first AC-DC conversion circuit comprises a first rectifying device, a second rectifying device, a third rectifying device, and a fourth rectifying device; and
the first rectifying device and the third rectifying device are connected in series and then connected in parallel to output ends of the first AC-DC conversion circuit; the second rectifying device and the fourth rectifying device are connected in series and then connected in parallel to the output ends of the first AC-DC conversion circuit; and a secondary-side winding of the transformer is connected in parallel between a series connection end of the first rectifying device and the third rectifying device and a series connection end of the second rectifying device and the fourth rectifying device.

7. The power converter according to any one of claims 1 to 5, wherein a secondary-side winding of the power transformer comprises at least two sub secondary-side windings, the at least two sub secondary-side windings comprise at least three secondary-side winding connection ends, and the at least two sub secondary-side windings share one secondary-side winding connection end; the at least two sub secondary-side windings are in a one-to-one correspondence with the at least two sub primary-side windings, and a quantity of turns of any sub secondary-side winding is correspondingly adjusted based on a change of an excitation voltage input to any corresponding sub primary-side winding; and the first AC-DC conversion circuit comprises at least three input connection ends, and the at least three input connection ends are connected to the at least three secondary-side winding connection ends in a one-to-one correspondence manner.

8. The power converter according to claim 7, wherein the first AC-DC conversion circuit comprises a first rectifying device, a second rectifying device, a third rectifying device, and a fourth rectifying device; and
the first rectifying device and the third rectifying device are connected in series and then connected in parallel to output ends of the first AC-DC conversion circuit; one end of the second rectifying device is connected to one end of a first sub secondary-side winding of the at least two sub secondary-side windings, and the other end of the second rectifying device is connected to the output end of the first AC-DC conversion circuit; one end of the fourth rectifying device is connected to one end of a second sub secondary-side winding of the at least two sub secondary-side windings, and the other end of the fourth rectifying device is connected to the output end of the first AC-DC conversion circuit; and a common connection end of the first sub secondary-side winding and the second sub secondary-side winding is connected to a series connection end of the first rectifying device and the third rectifying device.

9. The power converter according to any one of claims 1 to 8, wherein the power converter further comprises an inductor connected in series with the transformer.

10. A power converter, wherein the power converter comprises a direct current DC-alternating current AC conversion circuit, a transformer, and a first AC-DC conversion circuit, and the DC-AC conversion circuit is coupled to the first AC-DC conversion circuit through the transformer; and
the DC-AC conversion circuit is configured to generate at least two different excitation voltages in a time-division manner; a secondary-side winding of the transformer comprises at least two sub secondary-side windings, the at least two sub secondary-side windings comprise at least three secondary-side winding connection ends, the at least two sub secondary-side windings share one secondary-side winding connection end, and a quantity of turns of one sub secondary-side winding is correspondingly adjusted based on a change of an excitation voltage input to a primary-side winding of the transformer; and the first AC-DC conversion circuit comprises at least three input connection ends, and the at least three input connection ends are connected to the at least three secondary-side winding connection ends in a one-to-one correspondence manner.

11. The power converter according to claim 10, wherein the first AC-DC conversion circuit comprises a first rectifying device, a second rectifying device, a third rectifying device, and a fourth rectifying device; and
the first rectifying device and the third rectifying device are connected in series and then connected in parallel to output ends of the first AC-DC conversion circuit; one end of the second rectifying device is connected to one end of a first sub secondary-side winding of the at least two sub secondary-side windings, and the other end of the second rectifying device is connected to the output end of the first AC-DC conversion circuit; one end of the fourth rectifying device is connected to one end of a second sub secondary-side winding of the at least two sub secondary-side windings, and the other end of the fourth rectifying device is connected to the output end of the first AC-DC conversion circuit; and a common connection end of the first sub secondary-side winding and the second sub secondary-side winding is connected to a series connection end of the first rectifying device and the third rectifying device.

12. The power converter according to claim 10 or 11, wherein the power converter further comprises a capacitor connected in series with the transformer and/or an inductor connected in series with the transformer.

13. A power supply, comprising a direct current source and a power converter, wherein the power converter comprises a direct current DC-alternating current AC conversion circuit, a transformer, and a first AC-DC conversion circuit, the direct current source is configured to supply power to the DC-AC conversion circuit, and the DC-AC conversion circuit is coupled to the first AC-DC conversion circuit through the transformer;
the DC-AC conversion circuit comprises at least three output connection ends;
a primary-side winding of the transformer comprises at least two sub primary-side windings, the at least two sub primary-side windings comprise at least three primary-side winding connection ends, at least two adjacent sub primary-side windings share one primary-side winding connection end, and the at least three primary-side winding connection ends are connected to the at least three output connection ends of the DC-AC conversion circuit in a one-to-one correspondence manner; and
the DC-AC conversion circuit is configured to generate at least two different excitation voltages in a time-division manner, wherein one excitation voltage is correspondingly output to one sub primary-side winding, and a quantity of turns of the sub primary-side winding is correspondingly adjusted based on a change of the input excitation voltage.

14. The power supply according to claim 13, wherein the direct current source comprises a DC-DC conversion circuit, and the DC-DC conversion circuit comprises at least one of the following: a Boost circuit, a Buck circuit, a Buck-Boost circuit of a positive output type, a single ended primary inductor converter SEPIC circuit, and a dual-SEPIC circuit.

15. The power supply according to claim 13 or 14, wherein the direct current source comprises an alternating current source and a second AC-DC conversion circuit; and the second AC-DC conversion circuit is configured to convert an alternating current provided by the alternating current source into a direct current, to supply power to the DC-AC conversion circuit.
